Europäisches Patentamt

European Patent Office

Office européen des brevets

(11) Publication number: **0 476 154 A1**

## EUROPEAN PATENT APPLICATION
### published in accordance with Art. 158(3) EPC

(21) Application number: 91907248.8

(22) Date of filing: **04.04.91**

(86) International application number:
**PCT/JP91/00449**

(87) International publication number:
**WO 91/15815 (17.10.91 91/24)**

(51) Int. Cl.5: **G05B 19/05**

(30) Priority: **05.04.90 JP 91311/90**

(43) Date of publication of application:
**25.03.92 Bulletin 92/13**

(84) Designated Contracting States:
**DE FR IT**

(71) Applicant: **FANUC LTD.**
**3580, Shibokusa Aza-Komanba, Oshino-mura**
**Minamitsuru-gun, Yamanashi 401-05(JP)**

(72) Inventor: **YAMAUCHI, Takashi, Fanuc Mansion**
**Harimomi 6-202**
**3537-1, Shibokusa, Oshinomura**
**Minamitsuru-gun, Yamanashi 401-05(JP)**

(74) Representative: **Brunner, Michael John et al**
**GILL JENNINGS & EVERY 53-64 Chancery**
**Lane**
**London WC2A 1HN(GB)**

(54) **SYSTEM FOR EXECUTING INSTRUCTION OF PC.**

(57) A system for executing instructions of a PC in which a special purpose processor (15) and a general purpose processor (11) execute the instructions sharing processes with one another. When the special purpose processor (15) reads out particular instructions (A, C) it writes the address of the particular instructions (A, C) into a buffer region (16g), and leaving them as they are, continues the execution of sequential instructions. Therefore, without stopping the execution of the sequential instructions the special purpose processor can continue it. The general purpose processor (11) executes the particular instructions referring to the buffer region (16g), while executing the system program, for example. Therefore, the general purpose processor (11) can perform the execution of the system program, etc, without being disturbed, for example, by the interruption by the special purpose processor (15).

Fig. 1

EP 0 476 154 A1

TECHNICAL FIELD

The present invention relates to a method of executing commands by a programmable controller (PC), and more specifically, to a method of executing commands by a PC by which the execution of a command is shared among a plurality of processors.

BACKGROUND ART

Conventionally, a PC having a plurality of processors among which the execution of a sequence program is shared, to increase the processing speed is known, and Japanese Patent Unexamined Publication No. Sho 63 (1988)-214804 discloses an example of such a PC in which the processing speed of a sequence program is increased by sharing the execution of a command between a general purpose processor, which executes both the control of a PC as a whole and complicated sequence commands and a coprocessor which execute basic commands such as an OR, AND and the like.

In this case, first the coprocessor reads a sequence command from a memory, and if the command can be executed thereby, executes it as it is. If the command is a special command which cannot be executed by the coprocessor, the coprocessor notifies the general purpose processor of this through an interrupt or the like, and the general purpose processor then executes the special command.

While the general purpose processor is executing the special command, the coprocessor interrupts the processing thereby, and upon completion of the execution of the special command, the general purpose processor restarts the coprocessor, to make the coprocessor resume the execution of the sequence command.

Nevertheless, in the conventional method of executing commands by the PC, while the general purpose processor is executing the special command, the coprocessor must interrupt the execution of the sequence command. In general, when the general purpose processor executes a complicated command, this execution requires a long time. Consequently, when a sequence program includes many special commands, the time during which the coprocessor can process the sequence program, i.e., the scanning time, is increased.

Further, when the number of executions of a sequence command is increased in a PC in which a general purpose processor executes other processes, such as monitoring I/O signals and executing the commands of a high-level language such as PASCAL, C language and the like, the load on the general purpose processor is increased, and therefore, not only the execution of a sequence program but also the execution of the system program of the PC as a whole are delayed, thus the functions of the PC cannot be properly carried out.

Further, since the coprocessor is interrupted while the general purpose processor executes a special command, the processing thereby is delayed. In particular, since a today' coprocessors can execute a process at a high speed, such a coprocessor would be able to execute a considerable number of sequence commands during the long time required by the general purpose processor to execute a special command.

DISCLOSURE OF THE INVENTION

Taking the above into consideration, an object of the present invention is to provide a method of executing commands by a PC by which a general purpose processor and a coprocessor can execute the sequence command thereof independently of each other.

To attain the above object, according to the present invention, there is provided a method of executing commands by a PC by which the execution of a command is shared among a plurality of processors, comprising the steps of executing a sequence command by a coprocessor at a high speed, writing the address of a special command to a buffer region and sequentially executing the next command by the coprocessor when the coprocessor reads a special command which cannot be executed thereby, and by referring to the buffer region, reading the special command from that address and executing same by the general purpose processor while the general purpose processor executes a system program and the like, whereby a sequence program is executed.

When the coprocessor reads a special command, it writes the address of the special command to the buffer region and continues the execution of a sequence command as it is. As a result, the coprocessor does not need to interrupt the execution of the sequence program and can continue therewith.

Conversely, the general purpose processor refers to the buffer region and executes the special command while executing a system program and the like. Therefore, the general purpose processor can execute the system program and the like without being prevented from executing same by an interrupt and the like from the coprocessor.

BRIEF DESCRIPTION OF THE DRAWINGS

Figure 1 is a conceptual diagram of a method of executing commands by a PC according to the present invention;

Figure 2 is a time chart of a processing executed by a general purpose processor;

Figure 3 is a diagram showing an example of a special command;

Figure 4 is a block diagram of the hardware of a PC embodying the present invention;

Figure 5 is a diagram showing the memory map of a work RAM according to the present invention;

Figure 6 is a flowchart of a process executed by a coprocessor; and

Figure 7 is a flowchart of a process executed by a general purpose processor.

## BEST MODE OF CARRYING OUT THE INVENTION

An embodiment of the present invention will be described below with reference to the drawings.

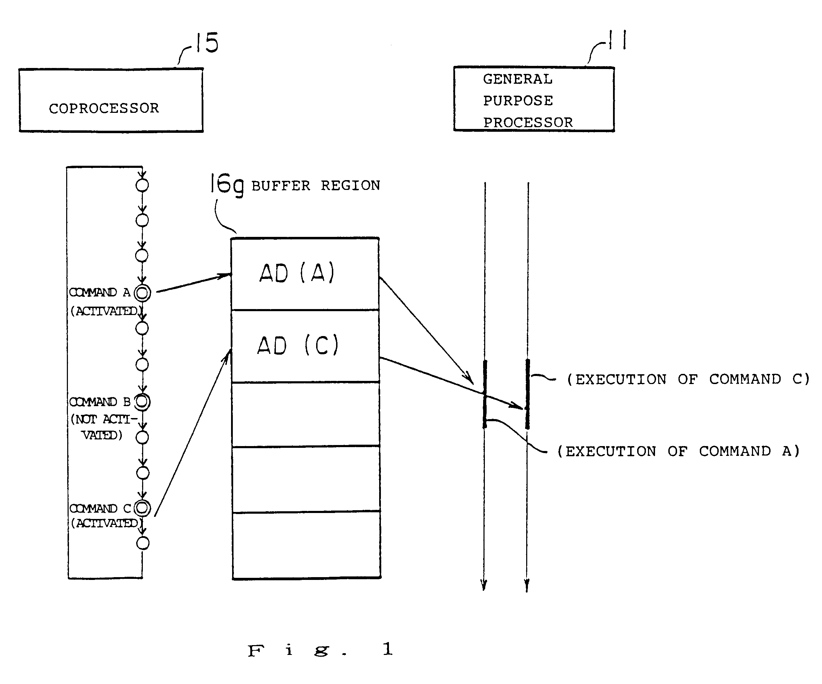

Figure 1 is a conceptual diagram of a method of executing commands by a PC according to the present invention. As shown in the Figure, a coprocessor 15 reads a sequence program, and if a sequence command read therefrom can be executed by the coprocessor 15, the coprocessor 15 executes the command as it is. The commands shown by the circles in the Figure can be executed by the coprocessor 15.

The coprocessor 15 reads a special command A shown by a double-circle when it has read the sequence program four times, and this special command A is activated. Since the special command A cannot be executed by the coprocessor 15, the coprocessor 15 writes the address AD (A) of the special command A to a buffer region 16g.

Subsequently, the coprocessor 15 executes the sequence commands and reads a special command B when it has read the sequence program three times. Since the command B is not activated, however, the coprocessor 15 executes the next sequence command as it is.

Subsequently, the coprocessor 15 reads a special command C when it has read the sequence program three times, and since the command C is activated, the coprocessor 15 writes the address AD (C) of the special command C to the buffer region 16g. Accordingly, even if the coprocessor 15 reads the special commands, it continuously executes the sequence commands only by sequentially writing the addresses of the special commands to the buffer region 16g.

Conversely, a general purpose processor 11 reads the content of the buffer region 16g at predetermined intervals, reads the written address, e.g., the address AD (A) of the command A and executes the command A, and the general purpose processor 11 executes the command C in the same way. Therefore, the general purpose processor 11 is not prevented from executing an essential system program and the like due to the need to execute the special commands.

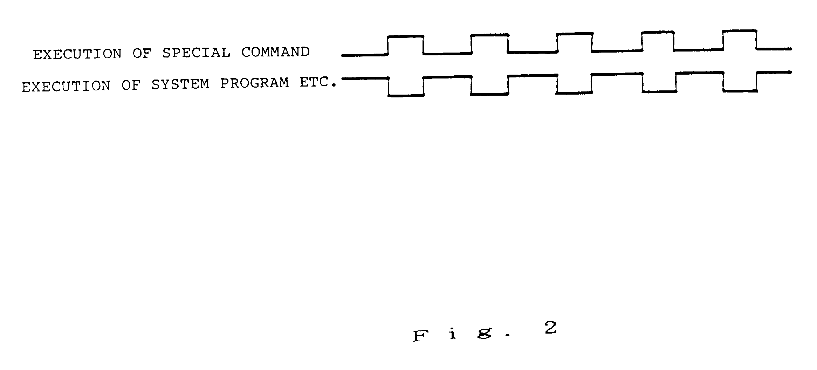

Figure 2 is a time chart of a process executed by the general purpose processor. More specifically, the general purpose processor executes the system program and the like and then executes the special commands at predetermined intervals, and alternately repeats the execution of the program and the command.

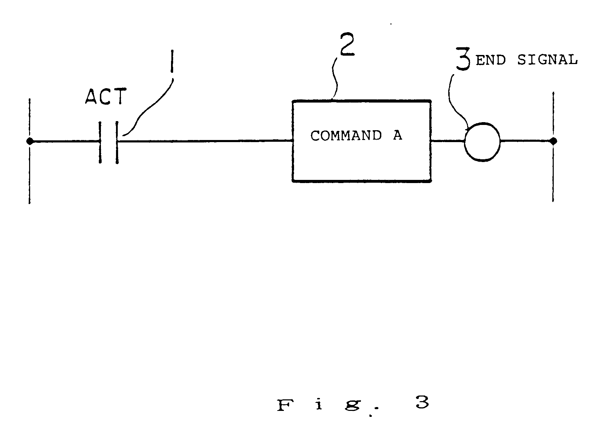

Figure 3 is a diagram showing an example of a special command, wherein the command A as the special command is shown in a ladder form. A contact 1 represents an activation signal for determining whether or not the command A designated at 2 is to be executed, and when the contact 1 is turned ON, the command A designated at 2 is executed; and when the contact 1 is turned OFF, the command A at 2 is not executed. Then, the command A at 2 is executed by the general purpose processor 11 and an end signal 3 is turned ON upon the completion of the execution. When the end signal 3 is turned ON, the contact 1 is turned OFF by another not shown command.

In general, although a special command is complex and requires a long processing time, it need not be processed at a relatively high speed if, for example, the spe cial command is a command for supplying data to a numerical control apparatus (CNC) or a command for displaying data at a display screen.

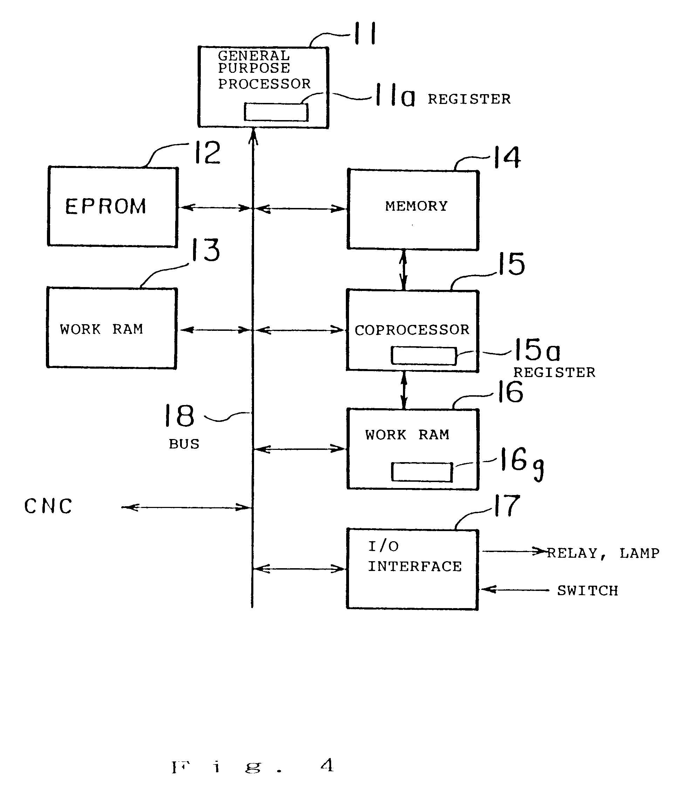

Figure 4 is a block diagram of the hardware of a PC embodying the present invention. Note, the following description takes a programmable machine controller (PMC) connected to the numerical control apparatus (CNC) as an example. The general purpose processor 11 controls the PMC as a whole in accordance with the system program stored in an EPROM 12, and includes a register 11a used to read the addresses of the special commands from the buffer region 16g of a work RAM 16.

The work RAM 13 is used to execute the system program of the general purpose processor 11, or is used as a buffer region when the general purpose processor 11 supplies the data of the PMC to the not shown CNC.

The coprocessor 15 executes the sequence program stored in a memory 14. This sequence program includes sequence commands which can be executed by the coprocessor 15 and special commands which cannot be executed by the coprocessor 15. Therefore, when the coprocessor 15 reads a special command, it writes the address of the special command to the buffer region 16g of the work RAM 16 and continues with the execution of a next sequence command. The coprocessor 15 also includes a register 15a, which is used to write the address of a special command to the buffer region 16g, to be described later, of the work RAM 16.

The work RAM 16 is used as a work region when the coprocessor executes the sequence program, and further, is used to temporarily store other I/O signals and the like, as described in detail later. An I/O interface 17 used for I/O signals supplies output signals to an external unit (machine tool) as an object to be controlled, and receives input signals therefrom. All of these elements are interconnected through a bus 18.

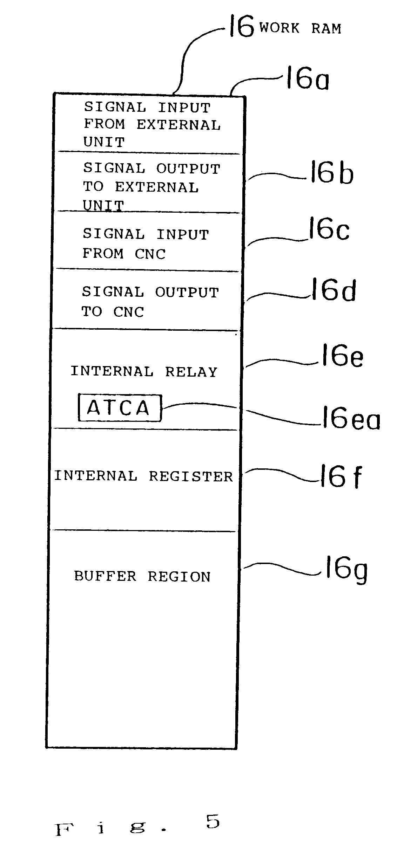

Figure 5 is a diagram showing the memory map of the work RAM 16, wherein a region 16a stores input signals received from the external unit; a region 16b stores output signals supplied to the external unit; a region 16c stores input signals received from the CNC; a region 16d stores output signal supplied to the CNC; and a region 16c stores the signal of internal relays used when the sequence program is executed. Further, a register 16ea (a signal ACTA) for temporarily storing the state of an activation signal (ACT) is provided. A region 16f is used as an internal register. The address of a special command is written to the buffer region 16g by the coprocessor 15, read by the general purpose processor 11, and then erased after the special command has been executed. More specifically, the buffer region 16g is used to request the execution of the special command, and to confirm the completion of the execution of the special command.

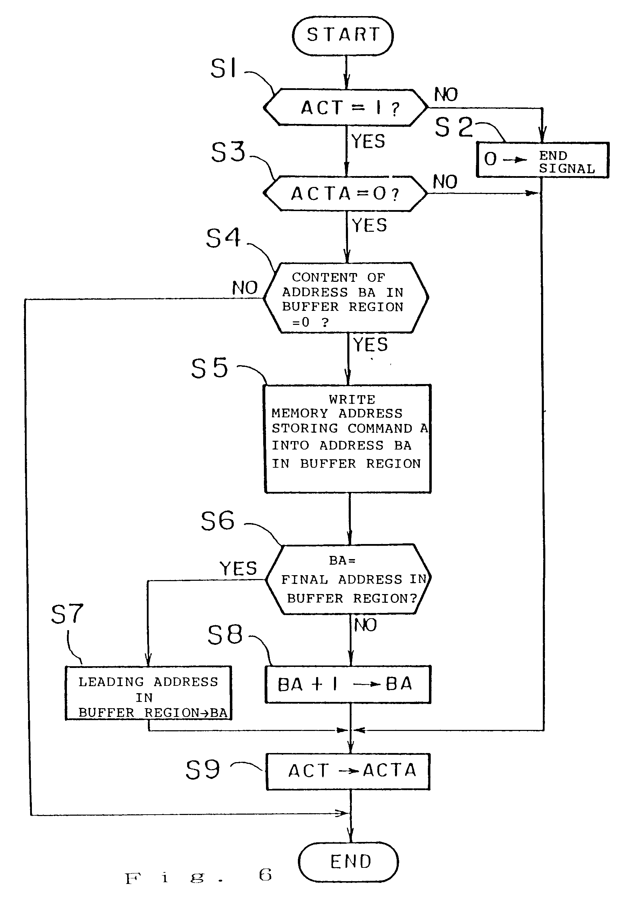

Figure 6 is a flowchart of a process executed by the coprocessor, wherein numerals prefixed with an "S" indicate the number of steps of the process.

[S1] It is determined whether or not the activation signal (ACT) 1 of the command A designated at 2 as the special command is "1" (ON). If ACT = "1", the process goes to step S3, and if ACT is not "1", the process goes to step S2.

[S2] As the activation signal is not "1" the command A at 2 need not be executed, and thus 0 is written to the end signal 3 and the process is ended.

[S3] It is determined whether or not the signal ACTA [stored in the register 16ea] to which the activation signal (ACT) 1 is supplied and stored therein is 0. If ACTA = 0, the process goes to step S4 because the activation signal 1 is turned ON for the first time, and if the ACTA is 1, the processing is not needed at this time and thus the routine is ended because the activation signal 1 was turned ON during a previous processing.

[S4] It is determined whether or not the address position of the buffer region 16g to which writing is carried out is 0. If this address position is 0, the process goes to step S5, as the writing is possible, and if the address position is not 0, the process is ended because writing is impossible. The addess BA at this time is stored in the register 15a.

[S5] The memory address of the command A at 2 is written to the address BA in the buffer region 16g indicated by the register 15a.

[S6] If the address BA indicated by the register 15a is the final address in the buffer region 16g, the process goes to step S7, and if the address BA is not the final address, the process goes to step S8.

[S7] Since the address BA in the register 15a is the final address in the buffer region 16g, the address BA is replaced by writing in the leading address of the buffer region 16g.

[S8] The content of the register 15a is incremented by +1, i.e., the content of the register 15a is made to designate the next address BA of the buffer region 16g.

[S9] The activation signal (ACT) is written to the internal memory signal ACTA.

When the coprocessor 15 reads special commands as described above, the coprocessor 15 sequentially writes the addresses of the special commands to the address positions BA of the buffer 16g indicated by the register 15a.

Note that the buffer region 16g is formed in the shape of a ring, and therefore, when the final address position is reached, the initial address position is restarted, as shown in step S7.

Further, note that, when the buffer region 16g is full, the writing of the memory address of a special command to the buffer region 16g is waited.

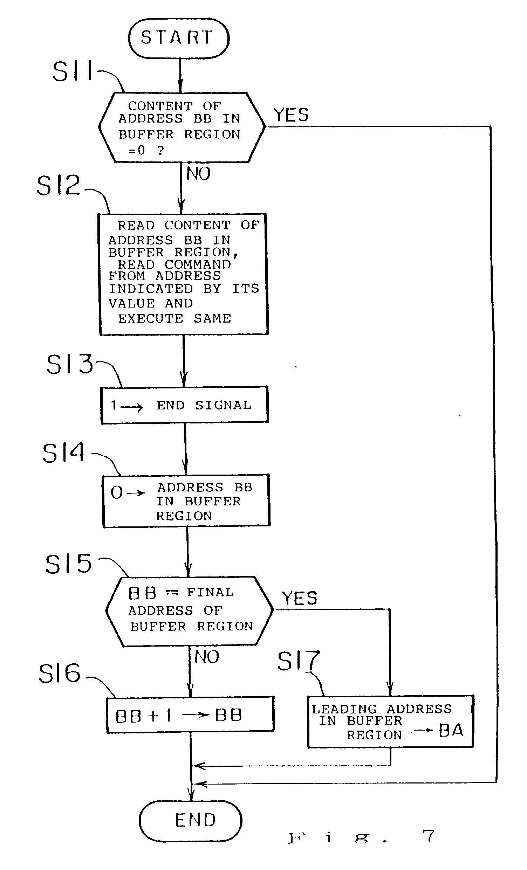

0 Next, a process executed by the general purpose processor will be described. Figure 7 is a flowchart of the process executed by the general purpose processor, wherein numerals prefixed with an "S" indicate the number of steps of the process.

[S11] The content of the address BB of the buffer region 16g indicated by the register 11a is determined, and if the content is 0, the processing is ended, as this denotes that there is no special command to be executed by the general purpose processor 11. If the content of the address BB is not 0, the process goes to step S12.

[S12] The general purpose processor 11 refers to the memory address in which a special command is stored, based on the content of the buffer memory 16g indicated by the address BB, and reads and executes the special command.

[S13] Upon the completion of the execution of the special command, 1 is written to the end signal 3.

[S14] Since the special command has been executed, 0 is written to the address BB of the buffer region 16g, which enables the coprocessor 15 to write the address of a new special command to the address BB.

[S15] If the content BB of the register 11a is the final address of the buffer region 16g, the process goes to step S17, and if the content BB is not the final address, the process goes to step S16.

[S16] The content BB of the register 11a is incremented by +1 and the address BB is advanced by 1.

[S17] Since the content of the register 11a indicates the final address of the buffer region 16g, the leading address of the buffer region 16g is input to the register 11a, to return to the leading address thereof.

The general purpose processor 11 reads the content of the register 11a in this manner, to obtain the addresses of special commands and then sequentially execute same. Upon the completion of the execution, the address position of the executed special command in the buffer region 16g is made 0, to enable the coprocessor 15 to write the address of a next special command thereinto.

More specifically, the coprocessor 15 writes the address of a special command to the buffer region 16g, and the general purpose processor 11 refers to the address and executes the special command. When the special command has been executed, the address position of the executed special command in the buffer region 16g is made 0. Accordingly, the coprocessor 15 and the general purpose processor 11 execute the processed thereof independently of each other and without interrupting the execution.

As a result, the coprocessor 15 does not need to wait for the processing to be executed by the general purpose processor 11, and further, the general purpose processor 11 is not prevented from executing the system program.

Although the programmable controller (PC) is described as a PMC connected to the numerical control apparatus (CNC) in the above description, the programmable controller is not limited thereto, and the present invention is similarly applicable to a programmable controller (PC) that independently controls a machine tool or the like.

As described above, according to the present invention, since the coprocessor writes the address of a special command, which cannot be executed thereby, to the buffer region, and the general purpose processor reads and executes the special command, the coprocessor and general purpose processor can execute the sequence program independently of each other, whereby the processing speeds of the coprocessor and general purpose processor are improved, and thus the processing speed of the PC as a whole is improved.

**Claims**

1. A method of executing commands by a programmable controller (PC) by which the execution of commands is shared among a plurality of processors, comprising the steps of:

   executing a sequence command by a coprocessor, at a high speed;

   writing an address of a special command to a buffer region and sequentially executing a next command by said coprocessor when said coprocessor reads a special command which cannot be executed thereby; and

   by referring to said buffer region, reading said special command from said address and executing same by said general purpose processor while said general purpose processor executes a system program and the like, whereby a sequence program is executed.

2. A method of executing commands by a PC according to claim 1, wherein said general purpose processor refers to said buffer region at a predetermined cycle, and executes said special command accordingly.

3. A method of executing commands by a PC according to claim 1, wherein a command executed by said coprocessor is a ladder program written in a ladder form.

4. A method of executing commands by a PC according to claim 1, wherein said buffer region is formed in a shape of a ring.

5. A method of executing commands by a PC according to claim 1, wherein when said buffer region is full, said coprocessor waits for the writing of the address of said special command.

6. A method of executing commands by a PC according to claim 1, wherein said PC is a programmable machine controller (PMC) contained in a numerical control apparatus.

15

COPROCESSOR

11

GENERAL
PURPOSE
PROCESSOR

16g BUFFER REGION

AD (A)

AD (C)

COMMAND A
(ACTIVATED)

COMMAND B
(NOT ACTI-
VATED)

COMMAND C
(ACTIVATED)

(EXECUTION OF COMMAND C)

(EXECUTION OF COMMAND A)

F i g .  1

EXECUTION OF SPECIAL COMMAND

EXECUTION OF SYSTEM PROGRAM ETC.

F i g . 2

EP 0 476 154 A1

EP 0 476 154 A1

ACT

```
        1                    2              3 END SIGNAL
        |                    |              |
──┤ ├──────────┌──────────────┐──────○──────
 ACT          │  COMMAND A    │
              └──────────────┘
```

Fig. 3

GENERAL
PURPOSE
PROCESSOR — 11

11a REGISTER

EPROM — 12

WORK RAM — 13

MEMORY — 14

COPROCESSOR — 15

15a REGISTER

18 BUS

WORK RAM — 16

16g

CNC

I/O INTERFACE — 17

RELAY, LAMP

SWITCH

Fig. 4

9

16 WORK RAM

16a

| |
|---|
| SIGNAL INPUT FROM EXTERNAL UNIT |
| SIGNAL OUTPUT TO EXTERNAL UNIT |
| SIGNAL INPUT FROM CNC |
| SIGNAL OUTPUT TO CNC |
| INTERNAL RELAY  ATCA |
| INTERNAL REGISTER |
| BUFFER REGION |

16b

16c

16d

16e

16ea

16f

16g

F i g . 5

Fig. 6

START

S11 — CONTENT OF
ADDRESS BB IN
BUFFER REGION
=0 ?

YES

NO

S12 — READ CONTENT OF
ADDRESS BB IN
BUFFER REGION,
READ COMMAND
FROM ADDRESS
INDICATED BY ITS
VALUE AND
EXECUTE SAME

S13 — 1 → END SIGNAL

S14 — 0 → ADDRESS BB
IN BUFFER
REGION

S15 — BB = FINAL
ADDRESS OF
BUFFER REGION

YES

NO

S16 — BB + 1 → BB

S17 — LEADING ADDRESS
IN BUFFER
REGION → BA

END

Fig. 7

# INTERNATIONAL SEARCH REPORT

International Application No PCT/JP91/00449

| **I. CLASSIFICATION OF SUBJECT MATTER** (if several classification symbols apply, indicate all) [6] |
|---|

According to International Patent Classification (IPC) or to both National Classification and IPC

Int. Cl[5]  G05B19/05

| **II. FIELDS SEARCHED** |
|---|

Minimum Documentation Searched [7]

| Classification System | Classification Symbols |
|---|---|
| IPC | G05B19/05 |

Documentation Searched other than Minimum Documentation
to the Extent that such Documents are Included in the Fields Searched [8]

| | |
|---|---|
| Jitsuyo Shinan Koho | 1932 - 1991 |
| Kokai Jitsuyo Shinan Koho | 1971 - 1991 |

| **III. DOCUMENTS CONSIDERED TO BE RELEVANT** [9] | | |
|---|---|---|
| Category [*] | Citation of Document, [11] with indication, where appropriate, of the relevant passages [12] | Relevant to Claim No. [13] |
| X | JP, A, 1-133107 (Yamatake-Honeywell Co., Ltd.), May 25, 1989 (25. 05. 89), (Family: none) | 1-6 |
| Y | JP, A, 1-116702 (Toyoda Machine Works, Ltd.), May 9, 1989 (09. 05. 89), (Family: none) | 1-6 |
| Y | JP, A, 63-305406 (Fanuc Ltd.), December 13, 1988 (13. 12. 88), (Family: none) | 1-6 |
| Y | JP, A, 60-237503 (Sharp Corp.), November 26, 1985 (26. 11. 85), (Family: none) | 1-6 |
| Y | JP, A, 55-33298 (Texas Instruments Inc.), March 8, 1980 (08. 03. 80) & US, A, 4215395 | 1-6 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

| **IV. CERTIFICATION** | |
|---|---|
| Date of the Actual Completion of the International Search | Date of Mailing of this International Search Report |
| June 25, 1991 (25. 06. 91) | July 29, 1991 (29. 07. 91) |
| International Searching Authority | Signature of Authorized Officer |
| Japanese Patent Office | |

Form PCT/ISA/210 (second sheet) (January 1985)

**FURTHER INFORMATION CONTINUED FROM THE SECOND SHEET**

| Y | JP, A, 52-127135 (Cincinnati Milacron Industries, Inc.), October 25, 1977 (25. 10. 77) & US, A, 4058711 | 1-6 |
|---|---|---|

**V.☐ OBSERVATIONS WHERE CERTAIN CLAIMS WERE FOUND UNSEARCHABLE ¹**

This international search report has not been established in respect of certain claims under Article 17(2) (a) for the following reasons:

1.☐ Claim numbers _____ , because they relate to subject matter not required to be searched by this Authority, namely:

2.☐ Claim numbers _____ , because they relate to parts of the international application that do not comply with the prescribed requirements to such an extent that no meaningful international search can be carried out, specifically:

3.☐ Claim numbers _____ , because they are dependent claims and are not drafted in accordance with the second and third sentences of PCT Rule 6.4(a).

**VI.☐ OBSERVATIONS WHERE UNITY OF INVENTION IS LACKING ²**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)